# EUROPEAN PATENT SPECIFICATION

(11) **EP 1 388 063 B1**
(45) Date of publication and mention of the grant of the patent: **09.08.2006**
(21) Application number: 02736847.1
(22) Date of filing: 14.05.2002
(51) Int. Cl.: G06F 11/36

(54) **SYSTEM AND METHOD FOR AUTOMATED ASSERTION ACQUISITION IN A JAVA COMPATIBILITY TESTING**
SYSTEM UND VERFAHREN ZUR AUTOMATISIERTEN ASSERTIONSERFASSUNG IN EINER JAVA-KOMPATIBILITÄTSPRÜFUNG
SYSTEME ET PROCEDE D'ACQUISITION D'ASSERTIONS AUTOMATISEE DANS UN ENVIRONNEMENT DE TEST DE COMPATIBILITE JAVA

(30) Priority: 16.05.2001 US 291670 P; 18.05.2001 US 292185 P; 14.06.2001 US 881791
(43) Date of publication of application: 11.02.2004
(73) Proprietor: SUN MICROSYSTEMS, INC., Santa Clara, California 95054 (US)
(72) Inventor: KINZHALIN, Arzhan I., St. Petersburg, 198904 (RU); CHERNEYSHEV, Andrey Y., St. Petersburg, 198904 (RU); GORSHENEV, Mikhail, Mountain View, CA 94040 (US); DOOLEY, Debra, San Jose, CA 95123 (US)
(74) Representative: Beresford, Keith Denis Lewis
(86) International application number: PCT/US2002/015323
(87) International publication number: WO 2002/093382

(56) References cited:
- J. DE RAEVE AND S. MC CARRON: "Automated Test Generation Technology" ADL PROJECT REPORT, [Online] 1997, pages 1-36, XP002251367 The Opengroup Website Retrieved from the Internet: <URL:http://adl.opengroup.org/documents/Ar chive/adl10rep.pdf> [retrieved on 2003-08-14]
- HIROYUKI SEKI ET AL: "A METHOD FOR TRANSLATING NATURAL LANGUAGE PROGRAM SPECIFICATIONS INTO ALGEBRAIC SPECIFICATIONS" SYSTEMS & COMPUTERS IN JAPAN, SCRIPTA TECHNICA JOURNALS. NEW YORK, US, vol. 23, no. 11, 1992, pages 1-16, XP000380833 ISSN: 0882-1666

## Description

### 1. Field of the Invention

The present invention relates generally to Java testing, and more particularly to automated Java specification tracking in a Java compatibility-testing environment.

### 2. Description of the Related Art

Currently, Java environments can be categorized into various Java technologies. A Java technology is defined as a Java specification and its reference implementation. Examples of Java technologies are Java 2 Standard Edition (J2SE), Java 2 Enterprise Edition (J2EE), and Mobile Information Device Profile (MIDP). As with most other types of Java software, a new Java technology should be tested to assure consistency across multiple platforms. This testing is generally performed using compatibility testing.

Compatibility testing refers to the methods used to test an implementation of a Java technology specification in order to assure consistency across multiple hardware platforms, operating systems, and other implementations of the same Java technology specification. When this assurance is accomplished by means of a formal process, application developers can then be confident that an application will run in a consistent manner across all tested implementations of the same Java technology specification. This consistent specification-based behavior is a primary function of compatibility testing.

Compatibility testing differs from traditional product testing in a number of ways. Unlike product testing, compatibility testing is not primarily concerned with robustness, performance, or ease of use. The primary purpose of Java compatibility testing is to determine whether an implementation of a technology is compliant with the specification of that technology.

Compatibility test development for a given feature relies on a complete specification and reference implementation for that feature. Compatibility testing is a means of ensuring correctness, completeness, and consistency across all implementations of a technology specification that are developed. The primary goal of compatibility testing is to provide the assurance that an application will run in a consistent manner across all tested implementations of a technology.

To determine if the implementation of a particular Java technology is compliant with the specification for the particular Java technology, technology compatibility kits (TCK) may be used. A TCK is a suite of tests, tools, and documentation that allows an implementor of a Java technology specification to determine if the implementation is compliant with the specification.

A TCK typically includes a Test Harness, defined as the applications and tools that are used for test execution and test suite management, and a TCK Test Suite, which is the composite of the actual test cases in a TCK that are executed to test an implementation. A TCK can also include documentation that includes the specific TCK usage procedures, and the compatibility testing requirements that apply to the related technology release (usually in the form of a TCK user's guide). Also, a description of the TCK appeals process can be included, as well as an audit process, which is used to better ensure the integrity of a consistent self-testing compatibility program.

As mentioned above, a TCK usually includes a TCK test suite, which is a set of tests designed to verify that an implementation of a Java technology complies with the appropriate specification. Each test in a TCK test suite is composed of one or more test cases that are designated by a test description. A test case is the source code and accompanying information designed to exercise one aspect of a specified assertion. Accompanying information may include test documentation, auxiliary data files and other resources used by the source code.

In order to be complete, a test suite includes a test case to verify each and every testable assertion that is made by the API specification. Test developers must review the actual specification document and generate at least one test case for each testable assertion that appears in the API specification.

Unfortunately, the conventional method for determining assertions for a particular specification is a laborious process involving a manual inspection of the specification. Prior to the test design stage during conventional testing, the test developer must scan through the specification and split the entire text into logical statements. Each logical statement then needs to be examined by type to indicate if it is a testable assertion.

Of course, the process of manually inspecting the specification is a time consuming process prone to errors. Moreover, since one of the most important issues of the TCK development process is to keep TCK tests synchronized with their technology's current API specification, the manual inspection process is exacerbated whenever the specification changes. Upon any specification change, the corresponding TCK tests must be revised and corrected if their functionality has been affected by the change. To accomplish this, the specification must be re-inspected to confirm the current assertions and determine if particular assertions should be removed or additional assertions should be added.

In view of the foregoing, there is a need for methods for tracking the specification to determine assertions. Preferably, the methods should be automated, and should provide tracking between different versions of a specification to identify TCK test that are affected by each change assertion.

J de Raeve and S. McCarron: "Automated Test Definition Technology", ADL Project Report, 1997 discloses a method for automated acquisition of assertions in a specification of a computer program. The method consists of processing an input specification comprising a plurality of sentences.

H. Seki and T. Kasami: "A Method for Translating Natural Language Program Specifications into Algebraic Specifications", Systems and Computers in Japan, Vol. 23, No. 11, 1992 discloses a translation system using rules of syntax, rules for instructing an intermediate structure similar to "categories" and rules for generating axioms to translate intermediate structures into axioms in the form of logical formulas. The disclosed method utilises the context of statement by taking as context for a statement other statements forming a paragraph within a specification.

### SUMMARY OF THE INVENTION

Broadly speaking, the present invention fills these needs by providing a system for tracking a specification that automatically obtains assertions within the specification. The embodiments of the present invention further provide testing of obtained assertions to determine if the assertions are valid assertions. In one embodiment, a method for automated acquisition of assertions in a specification of a computer program is disclosed. An input specification is received, wherein the input specification comprises a plurality of sentences. Then, a sentence is obtained from the plurality of sentences, and a determination is made as to whether the obtained sentence is a testable assertion. Next, the obtained sentence is marked as testable when the obtained sentence is a testable assertion. Some aspects of the present invention can identify a context within the specification, and obtain the sentence from the plurality of sentences by parsing the context. Moreover, the marked obtained sentence can be added to an assertion result set. Generally, the context is a set of circumstances related to the obtained sentence. Further, each assertion can comprise one, two, or more sentences of the specification.

In another embodiment, a computer program for automatically obtaining assertions from a specification for a computer program is disclosed. The computer program includes a code segment that receives an input specification for a computer program, and a code segment that identifies a context within the input specification. Further included is a code segment that parses the identified context to obtain assertions, and a code segment that determines whether the obtained assertions are testable statements. In addition, a code segment that adds the obtained assertions to an assertion result set is included. In this manner, the assertion result set can be used to facilitate testing of the specification.

A computer program for automated acquisition of assertions in a specification of a computer program is disclosed in a yet a further embodiment of the present invention. The computer program includes a code segment that receives an input specification, wherein the input specification comprises a plurality of sentences, and a code segment that obtains a sentence from the plurality of sentences. Further included is a code segment that determines whether the obtained sentence is a testable assertion, and a code segment that marks the obtained sentence as testable when the obtained sentence is a testable assertion.

Advantageously, the embodiments of the present invention allow a test developer to perform testing routines in a semi-automated way that improves performance, reduces human error, and allows the test developer to spend more time on test development itself. Moreover, the embodiments of the present invention produce various reports on how TCK covers the corresponding specification. These reports are very useful for project management since they allow the test developer to analyze TCK completeness and plan future TCK works. Other aspects and advantages of the invention will become apparent from the following detailed description, taken in conjunction with the accompanying drawings, illustrating by way of example the principles of the invention.

### BRIEF DESCRIPTION OF THE DRAWINGS

The invention, together with further advantages thereof, may best be understood by reference to the following description taken in conjunction with the accompanying drawings in which:
Figure 1 is diagram showing a specification tracking methodology, in accordance with an embodiment of the present invention;
Figure 2 is a use case diagram showing a specification tracking system, in accordance with an embodiment of the present invention;
Figure 3 shows dispatcher process for processing user commands, in accordance with an embodiment of the present invention;
Figure 4 is a block diagram showing task entry points, in accordance with an embodiment of the present invention;
Figure 5A is flowchart showing a process for obtaining specification assertions, in accordance with an embodiment of the present invention;
Figure 5B is flowchart showing a process for obtaining specification assertions and validating the assertions, in accordance with an embodiment of the present invention;
Figure 6 is a class diagram showing a Getassert framework class, in accordance with an embodiment of the present invention;
Figure 7 is a flowchart showing a process 204 for reporting TCK coverage of a specification, in accordance with an embodiment of the present invention; and
Figure 8 is a diagram showing reporting TCK information class, in accordance with an embodiment of the present invention.

### DETAILED DESCRIPTION OF THE PREFERRED EMBODIMENTS

An invention is disclosed for automated acquisition of assertions in a specification of a computer program. In the following description, numerous specific details are set forth in order to provide a thorough understanding of the present invention. It will be apparent, however, to one skilled in the art that the present invention may be practiced without some or all of these specific details. In other instances, well known process steps have not been described in detail in order not to unnecessarily obscure the present invention.

The embodiments of the present invention allow quick collection of information on a specification, the corresponding test suite, and the relationship between the specification and the test suite. Thus, the embodiments of the present invention simplify the TCK Test Development process. In particular, the embodiments of the present invention automatically identify assertions, track changes between specification versions, and identify TCK tests that are affected by each changed assertion.

As mentioned previously, test developers had to perform these routines manually. Advantageously, the embodiments of the present invention allow a test developer to perform these routines in a semi-automated way that improves performance, reduces human error, and allows the test developer to spend more time on test development itself. Moreover, as described in greater detail subsequently, the embodiments of the present invention produce various reports on how TCK covers the corresponding specification. These reports are very useful for project management since they allow the test developer to analyze TCK completeness and plan future TCK works.

The specification tracking of the embodiments of the present invention bind a specification assertion to the test that tests that specification assertion. After that binding is done a plurality of benefits is gained. First, upon each change in the specification assertion, the corresponding set of TCK tests can be tracked. This helps the test developer to identify a set of the tests that should be revised as soon as new specification version is available.

Second, the embodiments of the present invention provide different types of reports regarding how the TCK covers the corresponding specification. These reports include coverage information, which defines how many specification assertions are tested by the testsuite, and a list of tested and untested assertions. Third, the embodiments of the present invention keep binding information, which is the correspondence between a test case and an assertion.

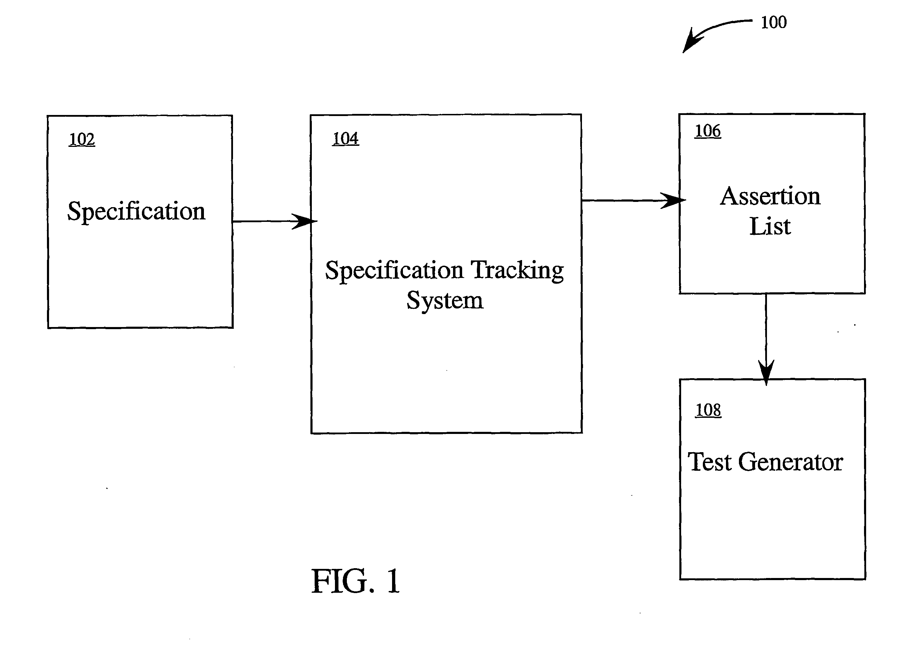

Figure 1 is diagram showing a specification tracking methodology 100, in accordance with an embodiment of the present invention. The specification tracking methodology 100 shows a specification 102, a specification tracking system 104, an assertion list 106, and a test generator 108. The specification 102 can be any specification, such as a Javadoc specification for a Java technology API. Preferably, the specification 102 includes a plurality of assertions that can be tested.

In operation, the specification 102 is provided to the specification tracking system 104 of the embodiments of the present invention. Once received, the specification tracking system 104 processes the specification to generate an assertion list 106. The assertion list 106 can then be used to create test cases manually, or automatically using a test generator 108. In addition, the specification tracking system 104 generates reports providing information on how the TCK tests cover the specification, as described in greater detail subsequently. These reports can include information on the percentage of the specification assertions covered by the TCK tests, a list of assertions tested by the TCK tests, and a list of assertions not tested by the TCK tests.

In one embodiment, the specification tracking system 104 is generated using the Java language and executed on a Java virtual machine. A Java virtual machine is used as an interpreter to provide portability to Java applications. In general, developers design Java applications as hardware independent software modules, which are executed Java virtual machines. The Java virtual machine layer is developed to operate in conjunction with the native operating system of the particular hardware on which the mobile multimedia framework system is to run. In this manner, Java applications can be ported from one hardware device to another without requiring updating of the application code.

Unlike most programming languages, in which a program is compiled into machine-dependent, executable program code, Java classes are compiled into machine independent byte-code class files which are executed by a machine-dependent virtual machine. The virtual machine provides a level of abstraction between the machine independence of the byte-code classes and the machine-dependent instruction set of the underlying computer hardware. A class loader is responsible for loading the byte-code class files as needed, and an interpreter or just-in-time compiler provides for the transformation of byte-codes into machine code.

More specifically, Java is a programming language designed to generate applications that can run on all hardware platforms, small, medium and large, without modification. Developed by Sun, Java has been promoted and geared heavily for the Web, both for public Web sites and intranets. Generally, Java programs can be called from within HTML documents or launched standalone. When a Java program runs from a Web page, it is called a "Java applet," and when run on a Web server, the application is called a "servlet."

Java is an interpreted language. The source code of a Java program is compiled into an intermediate language called "bytecode". The bytecode is then converted (interpreted) into machine code at runtime. Upon finding a Java applet, the Web browser invokes a Java interpreter (Java Virtual Machine), which translates the bytecode into machine code and runs it. Thus, Java programs are not dependent on any specific hardware and will run in any computer with the Java Virtual Machine software. On the server side, Java programs can also be compiled into machine language for faster performance. However a compiled Java program loses hardware independence as a result. Although the present invention is described based on the Java programming language, other programming languages may be used to implement the embodiments of the present invention, such as other object oriented programming languages.

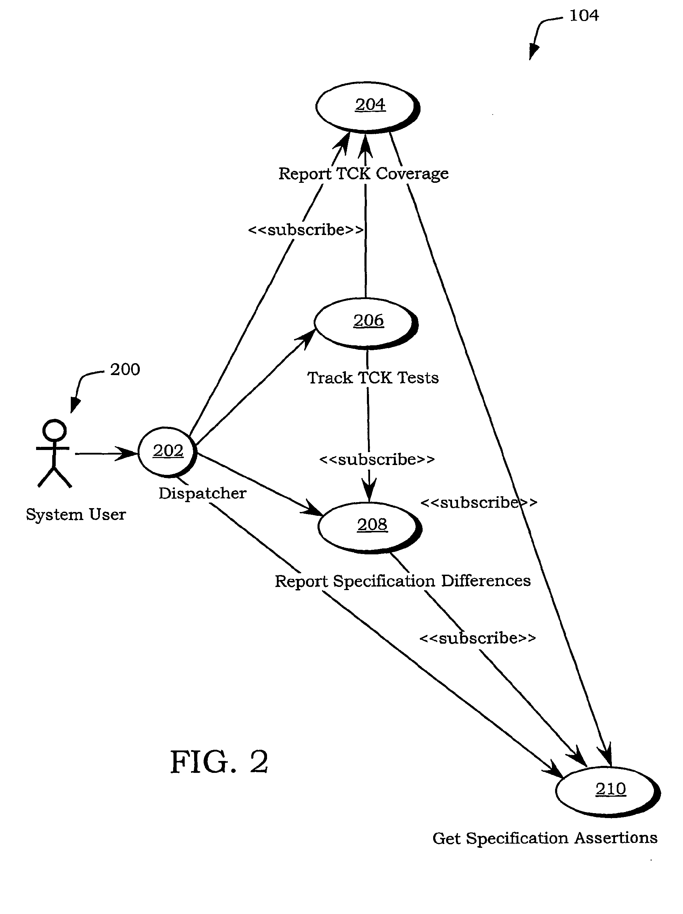

Figure 2 is a use case diagram showing a specification tracking system 104, in accordance with an embodiment of the present invention. The use case diagram of Figure 2 illustrates how a user 200 interacts with a specification tracking system 104 of the embodiments of the present invention. The specification tracking system 104 includes a dispatcher module 202 in communication with report TCK coverage module 204, a track TCK tests module 206, a report specification differences module 208, and a get specification assertions module 210. As will be seen, the specification tracking system 104 of the embodiments of the present invention is capable of performing a plurality of tasks, including obtaining specification assertions, reporting TCK information, tracking specification differences, and determining TCK tests testing a particular assertion.

In operation, the user 200 interacts with the dispatcher module 202, which hides the internal organization of the specification tracking system 104 details from the user 200. The dispatcher module 202 provides the user 200 with simple and intuitive interface to execute the underlying tasks. The user 200 submits a command to the dispatcher module 202, and the dispatcher module 202 makes a decision based on the received command as to which concrete actions it should perform depending on the system configuration and default settings.

The dispatcher module 202 preferably is not aware of any task-specific details. Based on the commands submitted by the user 200, the dispatcher module 202 determines the class responsible for executing specified task and runs it. This class will be referred to hereinafter as the "responsible class."

Each of responsible classes implements a special interface that provides the dispatcher module 202 with a uniform interface to run the task. In one embodiment, a specification tracking framework application programming interface (API) is used to implement the uniform interface. The framework API specifies which interfaces classes should expose, and how to use these interfaces. In addition, the framework API determines the protocols used, which is the method calling sequence.

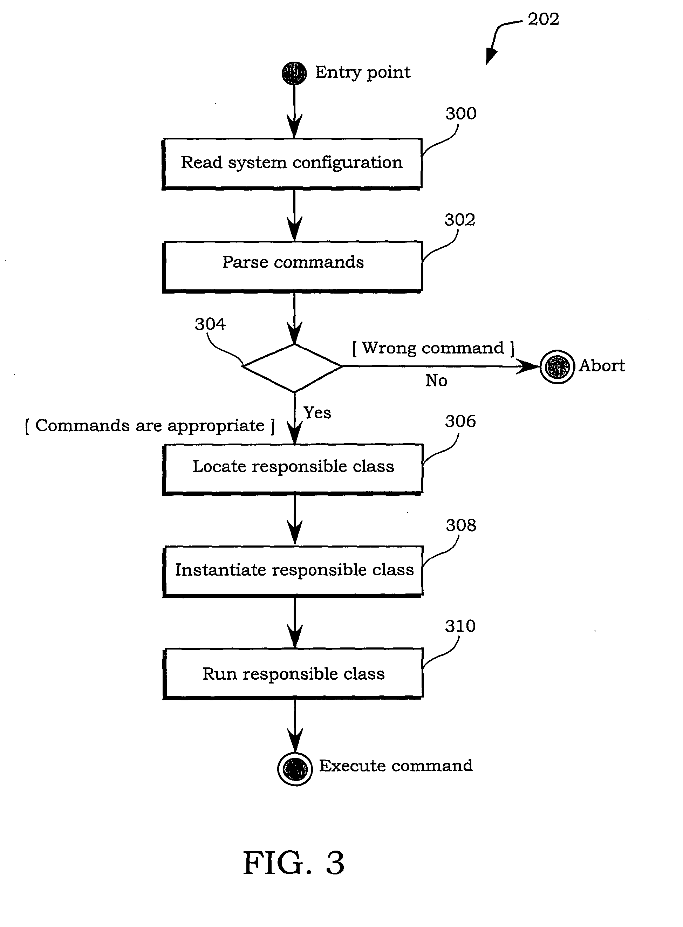

Figure 3 shows dispatcher process 202 for processing user commands, in accordance with an embodiment of the present invention. The dispatcher module 202 forms the entry point of specification tracking system of the embodiments of the present invention. The user submits a command to the dispatcher module 202 through the entry point, and the dispatcher module 202 reads the system configuration in operation 300. In addition, the dispatcher module parses the command submitted by the user in operation 302. In one embodiment, the syntax for the command can be:
java com.sun.tdk.spectrac.Main *command* [*doctype*] [*options*]

Where *command* is one of the following: 1) getassert, 2) report, 3) specdiff, or 4) track. In addition, *doctype* is type of specification to be processed, and *options* are command-specific options.

A decision is then made as to whether the command is appropriate for the current implementation of the specification tracking system, in operation 304. For example, if the specification tracking system were implemented as described above with reference to the syntax for a command, a command other than 1) getassert, 2) report, 3) specdiff, or 4) track, would not be appropriate. If the command is not appropriate the dispatch process 202 aborts, otherwise, the dispatch process continues with operation 306.

In operation 306, the dispatcher module 202 locates the responsible class for executing the received command. Each task has a responsible class, which is responsible for performing the functions of the task. After parsing the command received from the user, the dispatcher module can determine which class is responsible for executing the functions of the related task.

The responsible class is then instantiated in operation 308. Instantiation is a term used in object oriented programming to describe the creation of objects from classes. An object is a generic term that is used in the object-oriented programming environment to refer to a module that contains related code and variables. A software application can be written using an object-oriented programming language whereby the program's functionality is implemented using objects. Examples of object-oriented programming languages include C++ as well as Java.

Object-oriented programming is a method of creating computer programs by combining certain fundamental building blocks, and creating relationships among and between the building blocks. The building blocks in object-oriented programming systems are called "objects." An object is a programming unit that groups together a data structure (instance variables) and the operations (methods) that can use or affect that data. Thus, an object consists of data and one or more operations or procedures that can be performed on that data. The joining of data and operations into a unitary building block is called "encapsulation."

An object can be instructed to perform one of its methods when it receives a "message." A message is a command or instruction to the object to execute a certain method. It consists of a method selection (name) and a plurality of arguments that are sent to an object. A message tells the receiving object what operations to perform.

One advantage of object-oriented programming is the way in which methods are invoked. When a message is sent to an object, it is not necessary for the message to instruct the object how to perform a certain method. It is only necessary to request that the object execute the method. This greatly simplifies program development.

Object-oriented programming languages are predominantly based on a "class" scheme. A class defines a type of object that typically includes both instance variables and methods for the class. An object class is used to create a particular instance of an object. An instance of an object class includes the variables and methods defined for the class. Multiple instances of the same class can be created from an object class. Each instance that is created from the object class is said to be of the same type or class.

A hierarchy of classes can be defined such that an object class definition has one or more subclasses. A subclass inherits its parent's (and grandparent's etc.) definition. Each subclass in the hierarchy may add to or modify the behavior specified by its parent class.

To illustrate, an employee object class can include "name" and "salary" instance variables and a "set_salary" method. Instances of the employee object class can be created, or instantiated for each employee in an organization. Each object instance is said to be of type "employee." Each employee object instance includes the "name" and "salary" instance variables and the "set_salary" method. The values associated with the "name" and "salary" variables in each employee object instance contain the name and salary of an employee in the organization. A message can be sent to an employee's employee object instance to invoke the "set_salary" method to modify the employee's salary (i.e., the value associated with the "salary" variable in the employee's employee object).

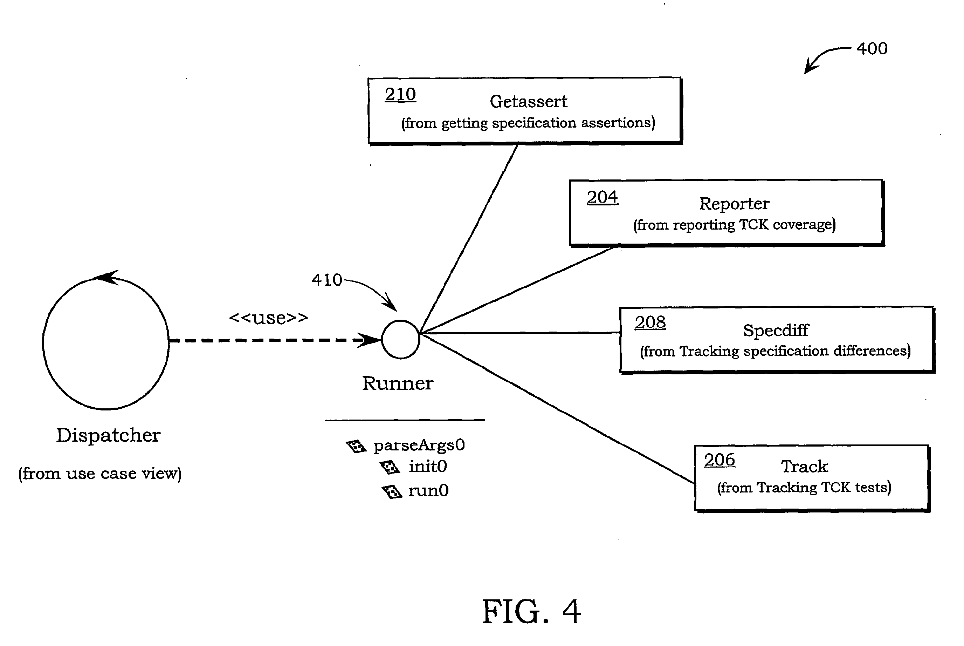

In operation 310, the responsible class is run and the command is executed. Each task has its responsible class, which is the entry point for that task. Figure 4 is a block diagram showing task entry points 400, in accordance with an embodiment of the present invention. The task entry points 400 include getassert 210, reporter 204, specdiff 208, and track 206, based on the command types described previously. As shown in Figure 4, the dispatcher module uses a runner 410 to parse the commands, and instantiate and run the responsible classes.

Each responsible class exposes a uniform interface that allows the Dispatcher to execute a task without knowledge of any task-specific details. In this manner, the implementation that is being called by the dispatcher module may be modified without any affect on dispatcher module's code.

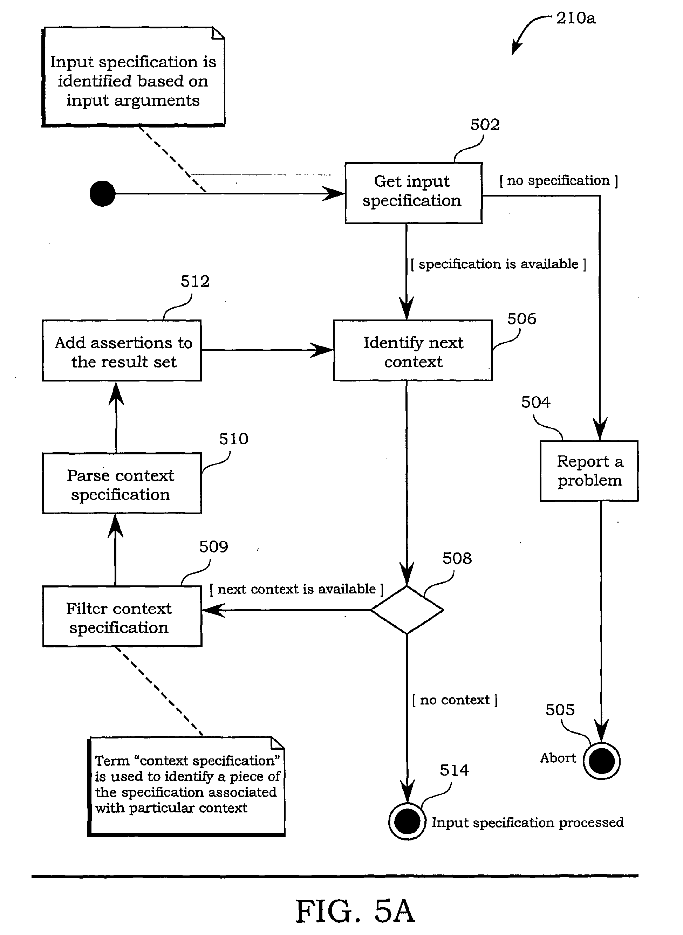

Figure 5A is flowchart showing a process 210a for obtaining specification assertions, in accordance with an embodiment of the present invention. As will be seen, a user can retrieve specification assertions using the *getassert* command of the specification tracking system. The *getassert* command has the corresponding abstract class *GetassertBase*, which is the base class for every class implementing *getassert* command.

In operation 502, the process 210a receives an input specification. As discussed above, the input specification can be identified based on the input arguments of the received command. After receiving a request to process a particular specification, the process 210a determines whether or not the requested specification is available. If the requested specification is not available, a problem is reported in operation 504, and the process 210a is aborted, in operation 505. However, if the requested specification is available, the process 210a continues with operation 506.

In operation 506, the next context is identified. The context is a set of circumstances related to each assertion. As such, each assertion of the specification has its context. In one embodiment of the present invention, the specification has a tree-like structure. For example, the API specification tree has a top-level specification as a root, and package-level specifications as immediate children of the root, with class-level specifications as their children, and finally constructor/method/field specifications as leaves. As mentioned previously, an assertion is uniquely identified by both the assertion text and the context associated with it. The assertion context can be defined as the associated node of the specification tree. For example, an assertion from a package-level specification would mean that the package-level is the assertion context. It should be noted, however, that embodiments of the present invention can process specifications that do not strictly adhere to this particular multi-level structure, because the specification tree can be considered to contain only one node.

A decision is then made, in operation 508, as to whether a context is available. If no context is available, the process 210a is completed in operation 514. Generally, when no further context is available the input application has been processed and an assertion result completed, as described below. If the context is available, the process 210a continues with operation 509.

The context specification is then filtered, in operation 509. A context specification is a portion of the specification that is associated with a particular context. Once the context specification is filtered, the context specification is parsed, in operation 510. Specifically, the context specification is parsed to find the assertions present in the particular context specification.

The embodiments of the present invention scan through the specification and split the entire text into logical statements. In some embodiments, discussed subsequently, each logical statement is then examined by type to indicate if it is a testable assertion.

Statements are considered testable assertions if they are intended to describe behavior of an API that can be tested by the TCK. Also, examples or sample code pieces that are provided in the specification are typically testable and can be verified by the TCK. In this sense, examples or sample code are generally considered testable assertions. Further, it should be noted that some assertions can be implied or indirectly stated in the specification, and these should be identified as well for testing. Note that an implied assertion might also introduce a specification flaw that may not be obvious.

On the other hand, statements intended to describe the behavior of an API, but which cannot be tested by the TCK due to the special nature of the behavior or functionality, are generally considered non-testable assertions. Similarly, some statements will form general descriptions of the API such as a description of a package, class, method, or field, and so forth. If such a general description does not describe behavior, but is aimed rather at providing a context for the rest of the text, then such a statement is not intended to be an assertion and should not be tested. Hence, these statements are generally not considered to be assertions, as they are easy to misinterpret.

An exemplary context specification is shown in Table 1.

| Table 1 |
|---|
| public static String toString(int i, int radix) |
| Creates a string representation of the first argument in the radix specified by the second argument. |
| If the radix is smaller than Character.MIN_RADIX or larger than Character.MAX_RADIX, then the radix 10 is used instead. |
| If the first argument is negative, the first element of the result is the ASCII minus character '-' ('\u002d'). |
| If the first argument is not negative, no sign character appears in the result. |
| Parameters: |
| i - an integer. |
| radix - the radix. |
| Returns: |
| a string representation of the argument in the specified radix. |
| See Also: |
| Character.MAX_RADIX, Character.MIN_RADIX |
| |

**Table 2 shows a list of assertions based on the context specification shown in Table 1.**

| Table 2 | |
|---|---|
| A1. | Creates a string representation of the first argument in the radix specified by the second argument. |
| A2. | If the radix is smaller than Character.MIN_RADIX or larger than Character.MAX_RADIX, then the radix 10 is used instead. |
| A3. | If the first argument is negative, the first element of the result is the ASCII minus character '-' ('\u002d'). |
| A4. | If the first argument is not negative, no sign character appears in the result. |
| | |

Thus, tables 1 and 2 illustrate one example of how an embodiment of the present invention can parse a context specification and create a list of assertions based on that context specification.

Having parsed the context specification, the discovered assertions are added to an assertion result set, in operation 512. The process 210a then continues with another identify context operation 506. In this manner, the process 210a can parse through an input specification and generate a list of assertions based on the input specification. As mentioned above, in some embodiments of the present invention, each logical statement is can be examined by type to indicate if it is a testable assertion.

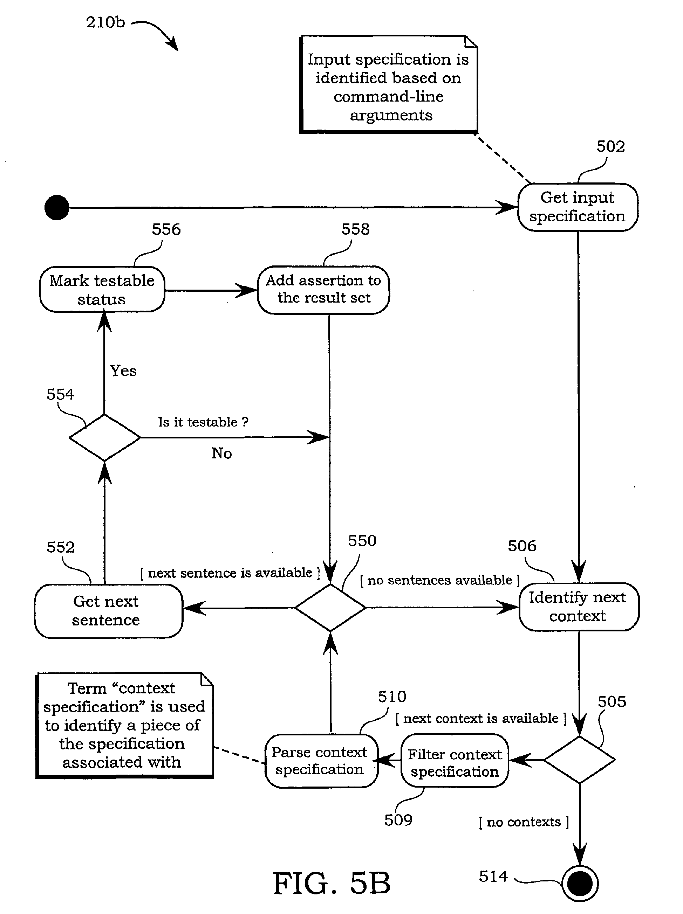

Figure 5B is flowchart showing a process 210b for obtaining specification assertions and validating the assertions, in accordance with an embodiment of the present invention. Similar to the process 210a of Figure 5A, in operation 502 of process 210b an input specification is received. As discussed above, the input specification can be identified based on the input arguments of the received command.

In operation 506, the next context is identified. A decision is then made, in operation 508, as to whether a context is available. If no context is available, the process 210b is completed in operation 514. Generally, when no further context is available the input application has been processed and an assertion result completed. If the context is available, the process 210b continues with operation 509.

The context specification is then filtered, in operation 509. As discussed above, a context specification is a portion of the specification that is associated with a particular context. Once the context specification is filtered, the context specification is parsed, in operation 510. Specifically, the context specification is parsed to find the assertions present in the particular context specification.

A decision is then made as to whether a sentence is available, in operation 550. Embodiments of the present invention can parse the input specification to obtain sentences having relevance to the input specification. If no sentence is available in the current context, the process 210b identifies the next context in 506. Otherwise, the process obtains the next sentence, in operation 552.

Another decision is then made as to whether the obtained sentence is a testable assertion, in operation 554. In one embodiment, a natural language processing system can be used to process the obtained sentence. In this case, the natural language processing system includes an input means for inputting the sentence obtained from the specification, and a knowledge base for storing linguistic knowledge and general knowledge. In addition, a partitioner is included that partitions the sentence into words, and a derivation module is included that refers to knowledge stored in the knowledge base and derives concepts respectively represented by the words obtained by the partitioner. Further, an integration module can be included that relates the concepts of the words, which are derived by the derivation module, with one another by referring to knowledge stored in the knowledge base. For example, a valid assertion can be identified as a sentence which uses particular keywords or phrases such as "required to" "should", "should not".

If the obtained sentence is not a testable assertion, another decision is made as to whether another sentence is available in the current context, in operation 550. However, if the obtained sentence is a testable assertion, sentence is marked as a valid, testable assertion, in operation 556. The assertion is then added to the assertion result set, in operation 558. Thereafter, another decision is made as to whether another sentence is available in the current context, in operation 550. In this manner, the process 210b can parse through an input specification and generate a list of valid assertions based on the input specification.

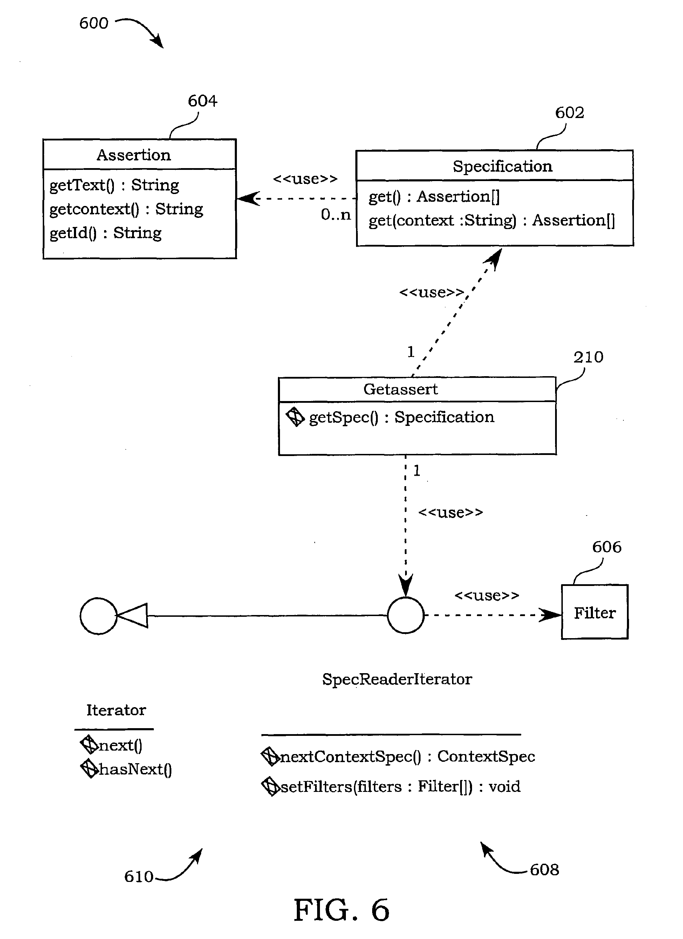

Figure 6 is a class diagram showing a Getassert framework class 600, in accordance with an embodiment of the present invention. The Getassert framework class 600 of Figure 6 shows the Getassert class 210, a specification class 602, and an assertion class 604. As shown in Figure 6, the Getassert class 210 calls the methods of the specification class 602 to obtain context specifications and the related assertions. The specification class 602, in turn, uses the assertion class 604 to obtain the sentences within each context specification.

As shown in Figure 6, a Spec Reader Iterator 608 is used to retrieve the specification. The Spec Reader Iterator 608 is responsible for obtaining the specification text from the specified source, determining the contexts, preprocessing the specification text, and providing an interface to iterate through the various contexts and their specifications. The responsible class, Getassert 210, iterates through the documentation and creates an internal representation of the input specification. The Getassert class 210 provides the public method Specification getSpec() which is used by other components of the specification tracking system or an external application to get an instance of Specification class.

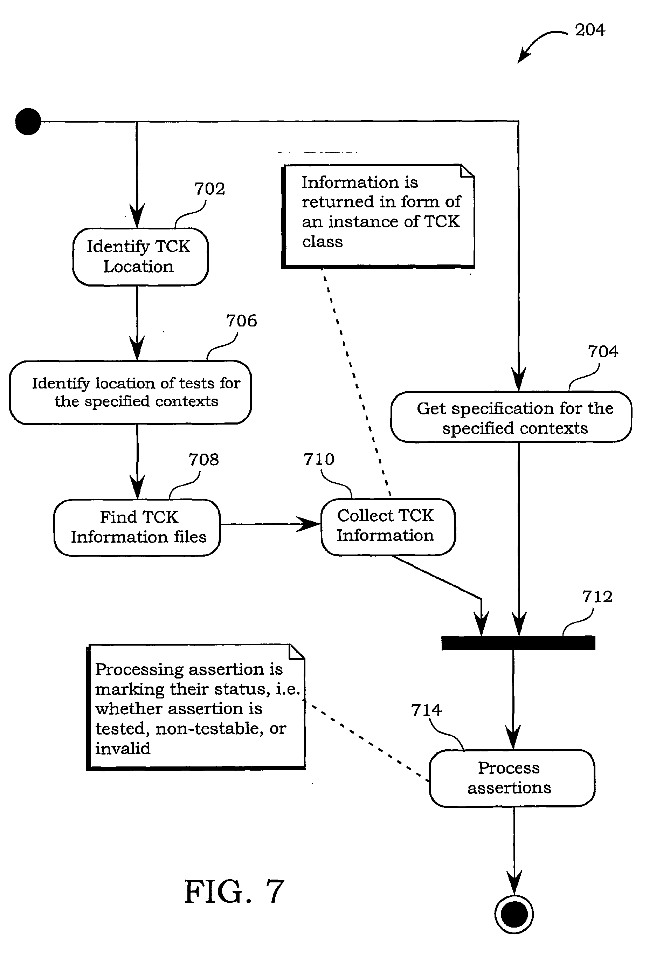

Figure 7 is a flowchart showing a process 204 for reporting TCK coverage of a specification, in accordance with an embodiment of the present invention. In operation 702, the location of the TCK is identified. In addition, the specification for the specified contexts can be obtained in operation 704.

Once the TCK location is identified, the location of the tests for the specified contexts is identified, in operation 706. Next, the TCK information files are located, in operation 708, and the TCK information is collected in operation 710. Typically, the information is returned in the form of an instance of the TCK class. At point 712, both the TCK information and the specification for the specified contexts that was obtained in operation 704 are available to the system. Thereafter the assertions are processed, in operation 714. Processing the assertions includes marking the assertion status, such as indicating whether an assertion is tested, non-tested, or invalid. To perform the process 204 for reporting TCK coverage of a specification, the TCK information class 204 is used

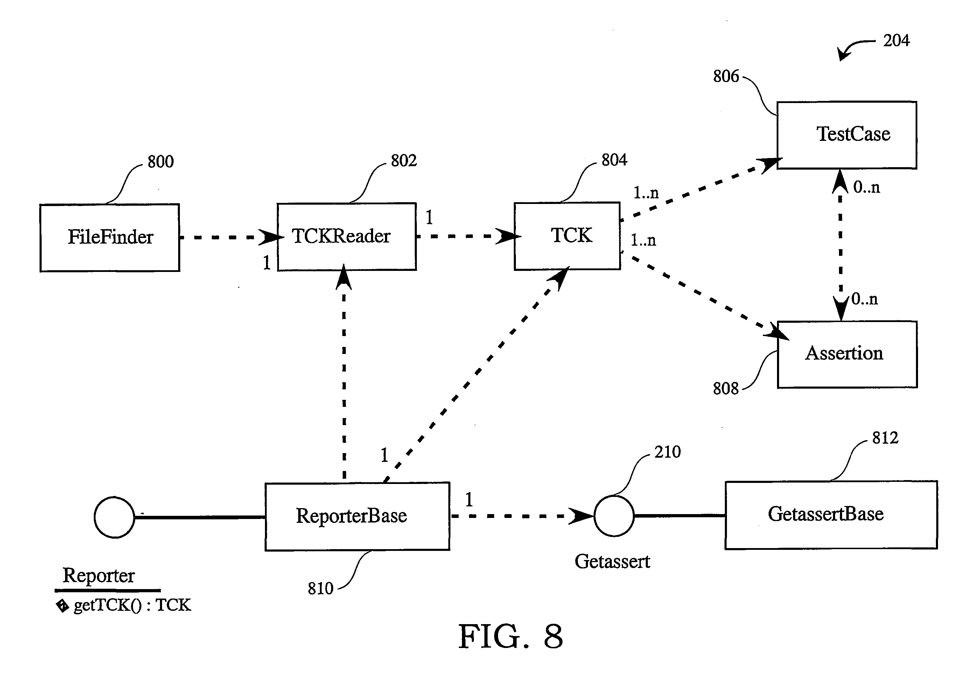

Figure 8 is a diagram showing reporting TCK information class 204, in accordance with an embodiment of the present invention. The TCK information class 204 includes a FileFinder module 800, a TCKReader module 802, a TCK 804, a TestCase 806, an Assertion 808, a ReporterBase 810, and a GetassertBase 812. Generally, before reports are created the TCK information files describing test-to-assertion relationship are created. The TCKReader module 802 uses the FileFinder module 800 to find these files for a set of contexts specified. The TCKReader module 802 typically collects TCK information by reading information files and provides this information to the Report class in form of an instance of TCK object 804. The Report class then gets the actual specification using the Getassert interface 210 and compares this with the information contained in the TCK 804. The output from this operation is still a TCK object with each assertion 808 marked with its status. A method Report.run() is then executed that reads that information and creates human-readable reports.

Although the foregoing invention has been described in some detail for purposes of clarity of understanding, it will be apparent that certain changes and modifications may be practiced within the scope of the appended claims. Accordingly, the present embodiments are to be considered as illustrative and not restrictive, and the invention is not to be limited to the details given herein, but may be modified within the scope of the appended claims.

## Claims

1. A method for automated acquisition of testable assertions in a specification of a computer program (102), comprising:
receiving as an input a multiple level structure defining a specification of a computer program (102), said multiple level structure comprising a plurality of logical statements;
identifying and parsing a context defined by a particular level within a received multiple level structure to find logical statements within the identified context;
determining whether each logical statement found within an identified context describes a testable behavior of an application programming interface; and
marking each logical statement determined to describe a testable behavior of an application programming interface.

2. A method in accordance with claim 1, further comprising:
generating an assertion result set(106) that includes each marked logical statement.

3. A method in accordance with claim 1 or 2, wherein the multiple level structure includes a root level, a package level, a class level, and a constructor/method/field level.

4. A method in accordance with claim 3, wherein the root level is a top level, the package level is a child of the root level, the class level is a child of the package level, and the constructor/method/field level is a child of the class level.

5. A method in accordance with any of claims 1-4, wherein each logical statement determined to describe a testable behavior of an application programming interface comprises at least one sentence in the text of the specification of the computer program (102).

6. Apparatus for automated acquisition of testable assertions in a specification of a computer program (102), comprising:
means for receiving as an input a multiple level structure defining a specification of a computer program (102), said multiple level structure comprising a plurality of logical statements;
means for identifying and parsing a context defined by a particular level within a received multiple level structure to find logical statements within the identified context;
means for determining whether each logical statement found within an identified context describes a testable behavior of an application programming interface; and
means for marking each logical statement determined to describe a testable behavior of an application programming interface.

7. Apparatus in accordance with claim 6, further comprising:
means for generating an assertion result set(106) that includes each marked logical statement marked by said means for marking.

8. Apparatus in accordance with claim 6 or 7, wherein said means for receiving as an input a multiple level structure is operable to receive a multiple level structure which includes a root level, a package level, a class level, and a constructor/method/field level.

9. Apparatus in accordance with claim 8, wherein the root level is a top level, the package level is a child of the root level, the class level is a child of the package level, and the constructor/method/field level is a child of the class level.

10. Apparatus in accordance with any of claims 6-9, wherein said means for determining whether each logical statement found within an identified context describes a testable behavior is operable to process logical statements comprising at least one sentence in a text of a specification of a computer program (102) and determine whether said at least one sentence describes a testable behavior of an application programming interface.

11. A computer readable medium including program instructions for automated acquisition of testable assertions in a specification of a computer program (102), the program instructions comprising:
program instructions for receiving as an input a multiple level structure defining a specification of a computer program (102), said multiple level structure comprising a plurality of logical statements;
program instructions for identifying and parsing a context defined by a particular level within a received multiple level structure to find logical statements within the identified context;
program instructions for determining whether each logical statement found within an identified context describes a testable behavior of an application programming interface; and
program instructions for marking each logical statement determined to describe a testable behavior of an application programming interface.

12. A computer readable medium in accordance with claim 11, further comprising:
program instructions for generating an assertion result set(106) that includes each marked logical statement.

13. A computer readable medium in accordance with claim 11 or 12, wherein the multiple level structure includes a root level, a package level, a class level, and a constructor/method/field level.

14. A computer readable medium in accordance with claim 13, wherein the root level is a top level, the package level is a child of the root level, the class level in a child of the package level, and the constructor/method/field level is a child of the class level.

15. A computer readable medium in accordance with any of claims 11-14, wherein each logical statement determined to describe a testable behavior of an application programming interface comprises at least one sentence in the text of the specification of a computer program (102).

## Patentansprüche

1. Verfahren zur automatischen Erfassung prüfbarer Aussagen in einer Spezifikation eines Computerprogramms (102), wobei
als Eingabe eine mehrere logische Ausdrücke enthaltende Multi-Level-Struktur empfangen wird, die eine Spezifikation eines Computerprogramms (102) definiert,
ein durch einen bestimmten Level innerhalb der empfangenen Multi-Level-Struktur definierter Kontext identifiziert und analysiert wird, um logische Ausdrücke innerhalb des identifizierten Kontexts zu finden;
für jeden innerhalb eines identifizierten Kontexts gefundenen logischen Ausdruck ermittelt wird, ob er ein prüfbares Verhalten einer Anwendungs-Programmierschnittstelle beschreibt; und
jeder ermittelte, ein prüfbares Verhalten einer Anwendungs-Programmierschnittstelle beschreibende logische Ausdruck markiert wird.

2. Verfahren nach Anspruch 1, wobei ferner eine Aussageergebnismenge (106) erzeugt wird, die jeden markierten logischen Ausdruck enthält.

3. Verfahren nach Anspruch 1 oder 2, wobei die Multi-Level-Struktur einen Root-Level, einen Package-Level, einen Class-Level und einen Constructor/Method/Field-Level enthält.

4. Verfahren nach Anspruch 3, wobei der Root-Level ein oberster Level, der Package-Level ein Nachfolger des Root-Levels, der Class-Level ein Nachfolger des Package-Levels und der Constructor/Method/Field-Level ein Nachfolger des Class-Levels ist.

5. Verfahren nach einem der Ansprüche 1 bis 4, wobei jeder ermittelte, ein prüfbares Verhalten einer Anwendungs-Programmierschnittstelle bestimmende logische Ausdruck mindestens einen Satz in dem Text der Spezifikation des Computerprogramms (102) enthält.

6. Vorrichtung zur automatischen Erfassung von prüfbaren Aussagen in einer Spezifikation eines Computerprogramms (102), mit
einer Einrichtung zum Empfang einer mehrere logische Ausdrücke enthaltenden Multi-Level-Struktur, die eine Spezifikation eines Computerprogramms (102) definiert, als Eingabe,
einer Einrichtung zum Identifizieren und Analysieren eines durch einen bestimmten Level innerhalb der empfangenen Multi-Level-Struktur definierten Kontexts, um logische Ausdrücke innerhalb des identifizierten Kontexts zu finden;
einer Einrichtung, die für jeden innerhalb eines identifizierten Kontexts gefundenen logischen Ausdruck ermittelt, ob er ein prüfbares Verhalten einer Anwendungs-Programmierschnittstelle beschreibt; und
einer Einrichtung zum Markieren jedes ermittelten, ein prüfbares Verhalten einer Anwendungs-Programmierschnittstelle beschreibenden logischen Ausdrucks.

7. Vorrichtung nach Anspruch 6, mit ferner einer Einrichtung zur Erzeugung einer Aussageergebnismenge (106), die jeden durch die Markiereinrichtung markierten logischen Ausdruck enthält.

8. Vorrichtung nach Anspruch 6 oder 7, wobei die Einrichtung zum Empfang einer Multi-Level-Struktur so ausgelegt ist, dass, sie eine Multi-Level-Struktur mit einem Root-Level, einem Package-Level, einem Class-Level und einem Constructor/Method/Field-Level empfängt.

9. Vorrichtung nach Anspruch 8, wobei der Root-Level ein oberster Level, der Package-Level ein Nachfolger des Root-Levels, der Class-Level ein Nachfolger des Package-Levels und der Constructor/Method/Field-Level ein Nachfolger des Class-Levels ist.

10. Vorrichtung nach einem der Ansprüche 6 bis 9, wobei die Einrichtung, die für jeden innerhalb eines identifizierten Kontexts gefundenen logischen Ausdruck ermittelt, ob er ein prüfbares Verhalten einer Anwendungs-Programmierschnittstelle beschreibt, so ausgelegt ist, dass sie logische Ausdrücke, die mindestens einen Satz in einem Text einer Spezifikation eines Computerprogramms (102) enthalten, verarbeitet und ermittelt, ob der mindestens eine Satz ein prüfbares Verhalten einer Anwendungs-Programmierschnittstelle beschreibt.

11. Computerlesbares Medium mit Programmanweisungen zur automatischen Erfassung von prüfbaren Aussagen in einer Spezifikation eines Computerprogramms (102), umfassend
Programmanweisungen zum Empfang einer mehrere logische Ausdrücke enthaltenden Multi-Level-Struktur, die eine Spezifikation eines Computerprogramms (102) definiert, als Eingabe,
Programmanweisungen zum Identifizieren und Analysieren eines durch einen bestimmten Level innerhalb einer empfangenen Multi-Level-Struktur definierten Kontexts, um logische Ausdrücke innerhalb des identifizierten Kontexts zu finden;
Programmanweisungen, die für jeden innerhalb eines identifizierten Kontexts gefundenen logischen Ausdruck ermitteln, ob er ein prüfbares Verhalten einer Anwendungs-Programmierschnittstelle beschreibt; und
Programmanweisungen zum Markieren jedes ermittelten, ein prüfbares Verhalten einer Anwendungs-Programmierschnittstelle beschreibenden logischen Ausdrucks.

12. Computerlesbares Medium nach Anspruch 11, ferner umfassend Programmanweisungen zur Erzeugung einer Aussageergebnismenge (106), die jeden markierten logischen Ausdruck enthält.

13. Computerlesbares Medium nach Anspruch 11 oder 12, wobei die Multi-Level-Struktur einen Root-Level, einen Package-Level, einen Class-Level und einen Constructor/Method/Field-Level enthält.

14. Computerlesbares Medium nach Anspruch 13, wobei der Root-Level ein oberster Level, der Package-Level ein Nachfolger des Root-Levels, der Class-Level ein Nachfolger des Package-Levels und der Constructor/Method/Field-Level ein Nachfolger des Class-Levels ist.

15. Computerlesbares Medium nach einem der Ansprüche 11 bis 14, wobei jeder ermittelte, ein prüfbares Verhalten einer Anwendungs-Programmierschnittstelle beschreibende logische Ausdruck mindestens einen Satz in dem Text der Spezifikation eines Computerprogramms (102) enthält.

## Revendications

1. Procédé d'acquisition automatisée d'affirmations pouvant être testées dans une spécification d'un programme informatique (102), comprenant :
la réception comme entrée d'une structure à niveaux multiples définissant une spécification d'un programme informatique (102), ladite structure à niveaux multiples comprenant une pluralité d'instructions logiques ;
l'identification et l'analyse d'un contexte défini par un niveau particulier à l'intérieur d'une structure à niveaux multiples reçue pour trouver des instructions logiques à l'intérieur du contexte identifié ;
le fait de déterminer si chaque instruction logique trouvée à l'intérieur d'un contexte identifié décrit un comportement pouvant être testé d'une interface de programmation d'application ; et
le marquage de chaque instruction logique déterminée comme décrivant un comportement pouvant être testé d'une interface de programme d'application.

2. Procédé selon la revendication 1, comprenant en outre :
la production d'un ensemble (106) de résultats d'affirmation qui comprend chaque instruction logique marquée.

3. Procédé selon la revendication 1 ou 2, dans lequel la structure à niveaux multiples comprend un niveau racine, un niveau progiciel, un niveau classe, et un niveau constructeur/procédé/domaine.

4. Procédé selon la revendication 3, dans lequel le niveau racine est un niveau supérieur, le niveau progiciel est un enfant du niveau racine, le niveau classe est un enfant du niveau progiciel, et le niveau constructeur/procédé/domaine est un enfant du niveau classe.

5. Procédé selon l'une quelconque des revendications 1 à 4, dans lequel chaque instruction logique déterminée comme décrivant un comportement pouvant être testé d'une interface de programmation d'application comprend au moins une phrase dans le texte de la spécification du programme informatique (102).

6. Dispositif destiné à l'acquisition automatisée d'affirmations pouvant être testées dans une spécification d'un programme informatique (102), comprenant :
un moyen destiné à recevoir comme entrée une structure à niveaux multiples définissant une spécification d'un programme informatique (102), ladite structure à niveaux multiples comprenant une pluralité d'instructions logiques ;
un moyen destiné à identifier et analyser un contexte défini par un niveau particulier à l'intérieur d'une structure à niveaux multiples reçue pour trouver des instructions logiques à l'intérieur du contexte identifié ;
un moyen destiné à déterminer si chaque instruction logique trouvée à l'intérieur d'un contexte identifié décrit un comportement pouvant être testé d'une interface de programmation d'application ; et
un moyen destiné à marquer chaque instruction logique déterminée comme décrivant un comportement pouvant être testé d'une interface de programme d'application.

7. Dispositif selon la revendication 6, comprenant en outre :
un moyen destiné à produire un ensemble (106) de résultats d'affirmation qui comprend chaque instruction logique marquée par ledit moyen destiné à marquer.

8. Dispositif selon la revendication 6 ou 7, dans lequel ledit moyen destiné à recevoir comme entrée une structure à niveaux multiples est utilisable pour recevoir une structure à niveaux multiples qui comprend un niveau racine, un niveau progiciel, un niveau classe, et un niveau constructeur/procédé/domaine.

9. Dispositif selon la revendication 8, dans lequel le niveau racine est un niveau supérieur, le niveau progiciel est un enfant du niveau racine, le niveau classe est un enfant du niveau progiciel, et le niveau constructeur/procédé/domaine est un enfant du niveau classe.

10. Dispositif selon l'une quelconque des revendications 6 à 9, dans lequel ledit moyen destiné à déterminer si chaque instruction logique trouvée à l'intérieur d'un contexte identifié décrit un comportement pouvant être testé est utilisable pour traiter des instructions logiques comprenant au moins une phrase dans un texte d'une spécification d'un programme informatique (102) et pour déterminer si ladite au moins une phrase décrit un comportement pouvant être testé d'une interface de programmation d'application.

11. Support lisible en ordinateur incluant des instructions de programme pour l'acquisition automatisée d'affirmations pouvant être testées dans une spécification d'un programme informatique (102), comprenant :
des instructions de programme pour la réception comme entrée d'une structure à niveaux multiples définissant une spécification d'un programme informatique (102), ladite structure à niveaux multiples comprenant une pluralité d'instructions logiques ;
des instructions de programme pour l'identification et l'analyse d'un contexte défini par un niveau particulier à l'intérieur d'une structure à niveaux multiples reçue pour trouver des instructions logiques à l'intérieur du contexte identifié ;
des instructions de programme pour déterminer si chaque instruction logique trouvée à l'intérieur d'un contexte identifié décrit un comportement pouvant être testé d'une interface de programmation d'application ; et
des instructions de programme pour le marquage de chaque instruction logique déterminée comme décrivant un comportement pouvant être testé d'une interface de programme d'application.

12. Support lisible en ordinateur selon la revendication 11, comprenant en outre :
des instructions de programme pour la production d'un ensemble (106) de résultats d'affirmation qui comprend chaque instruction logique marquée.

13. Support lisible en ordinateur selon la revendication 11 ou 12, dans lequel la structure à niveaux multiples comprend un niveau racine, un niveau progiciel, un niveau classe, et un niveau constructeur/procédé/domaine.

14. Support lisible en ordinateur selon la revendication 13, dans lequel le niveau racine est un niveau supérieur, le niveau progiciel est un enfant du niveau racine, le niveau classe est un enfant du niveau progiciel, et le niveau constructeur/procédé/domaine est un enfant du niveau classe.

15. Support lisible en ordinateur selon l'une quelconque des revendications 11 à 14, dans lequel chaque instruction logique déterminée comme décrivant un comportement pouvant être testé d'une interface de programmation d'application comprend au moins une phrase dans le texte de la spécification du programme informatique (102).
